Europäisches Patentamt

European Patent Office

Office européen des brevets

(11) Publication number: **0 079 994**
A1

(19)

(12) **EUROPEAN PATENT APPLICATION**

(21) Application number: **81305524.1**

(22) Date of filing: **24.11.81**

(51) Int. Cl.³: **B 60 P 1/64**

(43) Date of publication of application: **01.06.83**
**Bulletin 83/22**

(84) Designated Contracting States: **AT BE CH DE IT LI LU NL SE**

(71) Applicant: **Turner, David Robin, 40 Nichols Way, Wetherby West Yorkshire (GB)**

(72) Inventor: **Turner, David Robin, 40 Nichols Way, Wetherby West Yorkshire (GB)**

(74) Representative: **Harrison, Michael Robert et al, URQUHART-DYKES & LORD 11th Floor Tower House Merrion Way, Leeds LS2 8PB (GB)**

(54) **Transportation of cargoes.**

(57) A method of securing a detachable cargo support means, such as a container (7), to a transporter vehicle comprises locating locating the cargo support means to support members (3a) and (3b) projecting upwardly from the normal load carrying surface (5) of the transporter vehicle. Additional cargo may then be carried in the space between the normal load carrying surface (5) and the cargo support means (7). An assembly for the transport of cargo support means, and a support member for locating cargo support means on a transporter vehicle, are also described.

## TRANSPORTATION OF CARGOES

The present invention relates to the transportation of cargoes.

A known road transport vehicle is adapted to carry a load such as a container by means of so-called twist locks positioned so as to locate and secure each corner of the container. The twist lock operates by passing through a non-circular hole in the bottom of a member attached to the bottom of the container and then being rotated about a vertical axis through approximately 90° so that the head of the twist lock is out of alignment with the major axis of the non-circular hole in the container.

There are several sizes of containers such as, for example, 40ft units, 30ft units and 20ft units. A transporter vehicle, for instance, a 40ft lorry semi-trailer, therefore, is generally equipped with several sets of such twist locks positioned so as to correspond to the corner positions of all the possible types of containers to be carried. In such a case there may often be twelve such twist locks distributed on the transporter vehicle so that in use the containers would be held in a suitable position for correct weight distribution.  The twist locks and containers are both of a well-known internationally standardised design, and as well as containers, other cargo carrying receptacles may be transported in a similar manner.  Such carriers may be, for instance, bulk liquid tanks, flat container beds or non-standard cargo containers or platforms.

The use of such cargo support means in the handling of cargoes greatly simplifies and speeds loading and unloading.

However, such cargo support means must usually be transported empty back to the loading location before being used again.  Thus, where an empty cargo supporting means, or one carrying a low density load is transported, a transporter vehicle may be loaded to capacity by the cargo supporting means and/or load and yet still be well within its weight carrying limits.  Conversely, a high density load such as steel rods occupies a relatively small poroportion of the potential cargo carrying volume of the transporter, which would advantageously be filled by an optimum load.

According to the present invention there is provided a method of securing a detachable cargo support means to a transporter vehicle, said method comprising locating said cargo support means to support members projecting upwardly from the normal load carrying surface of said transporter vehicle, so that additional cargo may be carried in the space between the normal load carrying surface of the transporter vehicle and the cargo support means.

Preferably the transporter vehicle is a lorry, truck, trailer or semi-trailer.

Preferably said cargo support means comprises one or more standard containers, non-standard cargo containers, tanks, flat container beds, or other cargo platforms or receptacles.

Preferably there is a support member at each corner of a substantially rectangular cargo support means.

Preferably the support members are equipped at their upper ends with substantially conventional twist locks positioned so as to mate with corresponding recesses in the cargo support means.

Preferably the support members are of adjustable height above the normal load carrying surface of the transporter vehicle.

Preferably said supporting members are removably attached to the normal load carrying surface of the transporter vehicle.

Preferably there may be attached to said supporting members substantially horizontally extending rails, such that, in use, said rails restrain the movement of cargo carried beneath the cargo support means, in a direction longitudinally and/or transversely of the transporter vehicle.

The present invention also provides an assembly for the transport of cargo support means, said assembly comprising a transporter vehicle having a normal load carrying surface, and a plurality of support members which, in use, project upwardly from said normal load carrying surface so as to locate said cargo support means above the level of the normal load carrying surface, so that additional cargo may be carried between said normal load carrying surface and said cargo support means.

Preferably said support members are secured vertically to said transporter vehicle by means of substantially conventional twist locks fitted to the normal load carrying surface of the transporter vehicle.

Preferably said support members when not in use may be retracted, folded or removed, or otherwise stowed so that the surface of the load carrying platform of the transporter vehicle is substantially horizontally flat.

More preferably said support members are stowed such that cargo support means may be secured to the normal load carrying surface of the transporter vehicle by means of substantially conventional twist locks fitted to said surface.

The present invention further provides a support member for locating cargo support means on a transporter vehicle, said support member being adapted so as to be capable of detachable attachment to cargo support means such that, in use, the support member holds said cargo support means above the normal load carrying surface of the transporter vehicle.

Preferably said support member is fitted with substantially conventional twist locks at its upper

0079994

end for the location and securing of the cargo support means.

Preferably said support member is adapted for retraction, folding or stowing, when not in use, so as to leave substantially flat the normal load carrying surface of the transporter vehicle.

Preferably said support member may be secured in an upright position on the transporter vehicle by means of substantially conventional twist locks fitted to the normal load carrying surface of the transporter vehicle.

Preferably said supporting member is capable of being fitted with substantially horizontally extending rails that in use restrain the transverse and/or longitudinal movement of cargo carried between the normal load carrying surface of the transporter vehicle and the cargo support means.

The support member may be an integral part of the transporter vehicle, or may be free standing on the normal load carrying surface of the transporter vehicle, either individually or joined by suitable connecting members to one or more similar support members. Conveniently, said support member is detachably attached to said transporter vehicle, and arranged so that when not required it can be stowed so as not to interfere with the conventional operating of the vehicle.

The present invention allows a transport operator to carry a more efficient mix of general cargo comprising both high and low density cargoes on the same transporter vehicle. This is particularly useful in connection with the transport of empty containers or similar cargo support means, in combination with loads such as, for instance, steel bars, ingots, drums, concrete products and other general cargo. Rising operating costs make the carrying of an optimum load for each transportation unit increasingly desirable, so such mixtures of loads are economically advantageous.

Embodiments of the present invention will now be described, by way of examples only, and with reference to the accompanying drawings, in which:-

Figure 1 is a diagrammatic representation of a loaded transporter in accordance with the present invention;

Figure 2 is a perspective view of a support member in accordance with the present invention;

Figure 3 is a perspective view of a member on a transporter, such as that shown in Figure 1, to which the support member of Figure 2 is fitted;

Figure 4 is a side elevation of the support member of Figure 2 when fitted to the transporter equipped as in Figure 3; and

Figure 5 is a rear elevation of an alternative form of support member in accordance with the present invention.

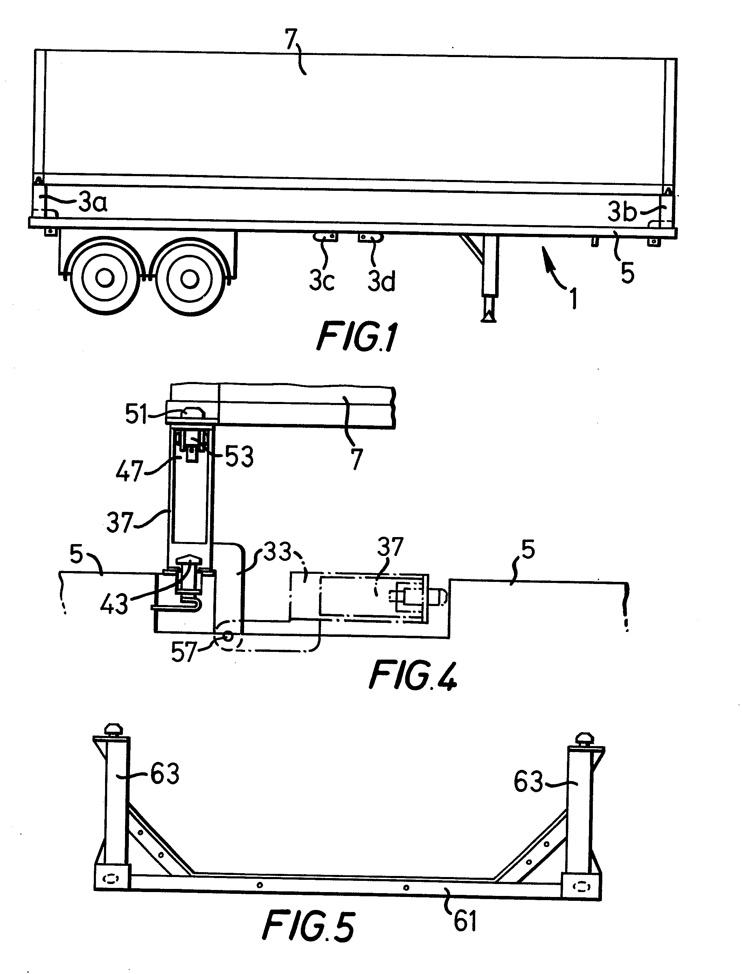

Referring to Figure 1 of the accompanying drawings, a transporter, in this case, a 40ft platform skeletal semi-trailer, carries one 40ft empty container 7 over, for example, approximately 15 tons of steel bars, which is  secured by chains to the normal load carrying surface 5 of the trailer 1.  The container 7 is supported above the normal load carrying surface 5 by means of four support members 3 (of which only the left-hand support members 3a and 3b are shown).  The central support members are in the stowed position.

When it is not desired to transport cargo support means such as containers above the normal load carrying surface of the trailer, the support members 3 may be folded into cut-outs in the normal load carrying surface 5 so as to lie as shown in Figure 1, with their locating and locking portions lying horizontally, leaving the load carrying surface 5 substantially as in a conventional transporter vehicle.

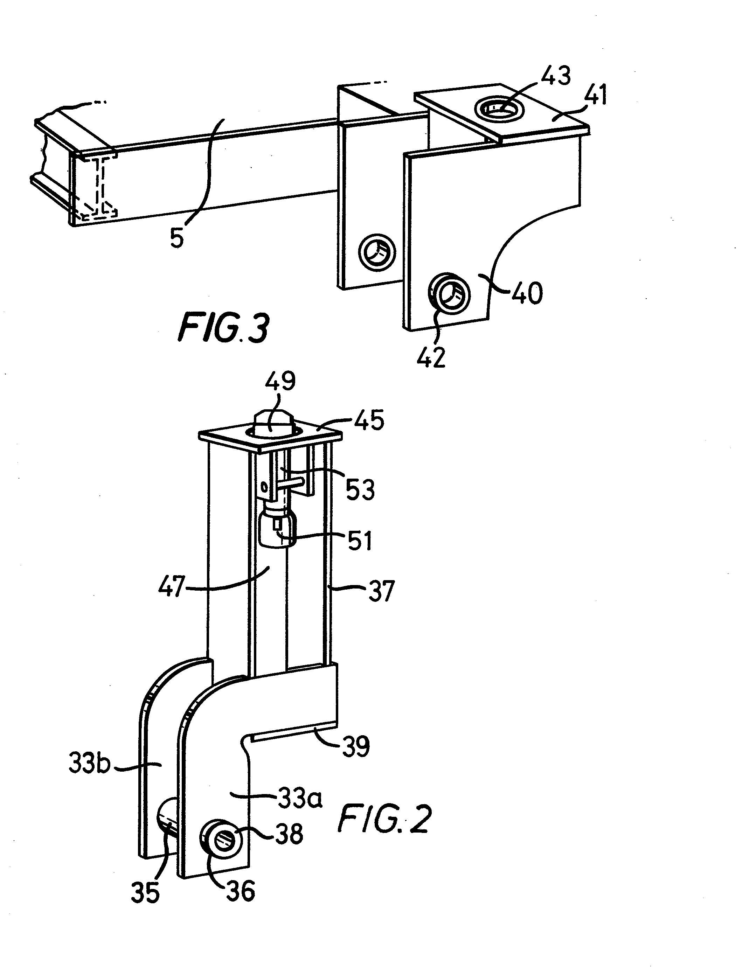

An embodiment of a support member and a trailer in accordance with the present invention are shown in Figures 2 to 4. In this embodiment of the present invention the support members pivot from a horizontal stowed position to a vertical operational position, and are held in the vertical position by the original twist lock mechanism supplied with the trailer. In the stowed position the support members lie flush with the normal load carrying surface 5 of the trailer.

Referring to Figure 3, the substantially conventional trailer load bearing surface 5 has cut-out portions extending transversely inwardly from near the edges of the load bearing surface 5 with, at the front or rear end of the cut-out portion with respect to the transporter vehicle, a substantially conventional twist lock mechanism 43 passing through a support plate 41. From the sides of the twist lock mechanism 43 project parallel substantially L-shaped members 40. At the lower end of the vertically extending portion most remote from the twist lock mechanism 43, are circular holes 42, which may conveniently be fitted with bushes.

The support members comprise parallel L-shaped members 33 whose parallel separation is slightly smaller than the parallel separation of the corresponding L-shaped members 40 on the trailer. The members 33 are similarly provided with, at the lower vertically extending portions of members 33, holes 36, which may also be provided with bushes 38. The holes 36 in the members 33 are joined by a cylinder 35 attached perpendicularly to the planes of the L-shaped members 33 and extending between them.

Connected between the horizontal arms of the L-shaped members 33 and projecting vertically upwardly from said arms is box-sectioned pillar 37. The pillar 37 has a base 39 which is provided with a rectangular hole through which, in use, the twist lock mechanism 43 may project and lock.

The top of the pillar 37 is fitted with a plate 45 extending perpendicular to the longitudinal axis of the pillar 37. Attached to the central re ion of the plate 45 is a twist lock 49 which has a rectangularly shaped horizontal cross-section, corresponding to similarly shaped recesses in the cargo support means to be carried.

Passing through a circular hole in the plate 45 and the lock 49 is an operating rod 53, to the lower end of which is fitted a handle 51. Access to the handle 51 is provided by the aperture 47 extending over the outer side of the U-sectioned pillar 37.

In use, the support member is held in position on the trailer by passing through the holes 36 and 42 a suitable retaining pin 57. In the stowed position the support member is allowed to pivot about the support pin 57 so as to lie with the surface of the pillar 37 lying substantially flush with the upper surface of the normal load bearing surface 5 of the trailer. A loaded container can then be conventionally secured to the twist lock mechanism 43 if desired.

In the operational position, the support member is pivoted upwards about the retaining pin 57 and is then secured in position by the twist lock mechanism 43 projecting through a hole in the base plate 39 of the

0079994

piller 37. This is then rotated conventionally through approximately 90° so as to secure the support member in the upright position. A container can then be conventionally secured by the twist lock mechanism 49 located on top of the pillar 37.

To secure cargo support means such as a container to the support means, the support means is locked in the upright position, and a container is lowered onto the support means. The top of the twist lock 49 is aligned with an oval hole in the container base and so projects through the hole. The twist lock is then rotated axially through about 90° so as to move the top of the lock out of alignment with the oval hole in the container, and using the handle 51 of the lock, the top of the twist lock is screwed down into contact with the container base, thus securely locking the container in position on the support means.

In an alternative embodiment, the support members may be permanently attached to the transporter by, for example, welding.

In another alternative embodiment shown in Figure 5, pairs of support members 63 may be joined together at their lower ends by a beam 61, for instance of steel, so that in use the support members 63 are free-standing on the load carrying surface 5 of the transporter, with the beam 61 lying transversely across the load carrying surface 5. In such an embodiment, the support members 63 are held in position by the locking of the support members 63 to the conventional twist locks fitted to the load carrying surface of the transporter vehicle, and by the weight of the additional cargo carried, which lies on the crossbeams 61, so retaining it in position. This embodiment is especially suitable for use with loads such as steel bars, and may be preferably to other embodiments described in that no modification of the transporter is required. A projection from the bottom of each of the support members 3 perpendicularly to the beam 61, either forwardly or rearwardly serves to prevent rocking of the support members on the braking or accelerating of the transporter vehicle. When not required, free-standing support members such as 63 may conveniently be carried beneath the load carrying surface 5 of the transporter vehicle.

In a further alternative embodiment the support members may be arranged so as to be capable of sliding vertically through holes in the load carrying surface of the transporter, from a stowed to an operational position. Such a support member may be held in the desired position by, for instance, retaining pins.

All components of the present invention may be made of any suitable material. For example, a support member in accordance with the present invention may be of box-section, tubular, channel section or angled steel.

CLAIMS:

1. An assembly for the transport of cargo support means, said assembly comprising a transporter vehicle having a normal load carrying surface, characterised in that there are provided a plurality of elongate support members capable of projecting upwardly from said normal load carrying surface, whereon the cargo support means may be located so as to hold said cargo support means above the level of the normal load carrying surface, so that additional cargo may be carried between said normal load carrying surface and said cargo support means.

2. An assembly according to claim 1 characterised in that said transporter vehicle is a lorry, truck, trailer or semi-trailer, and said cargo support means are one or more standard containers, non-standard containers, bulk fluid carrying tanks, flat container beds, or other suitable cargo receptacles or platforms.

3. An assembly according to claim 1 or claim 2 characterised in that said support members are provided with substantially conventional twist locks positioned at, or near, the upper ends of the support members, said twist locks being capable of mating with corresponding recesses in the cargo support means so as to secure the cargo support means to the support members.

4. An assembly according to any of the preceding claims, characterised in that each of said elongate support members extends substantially vertically from the normal load carrying surface of the transporter vehicle, and is secured to the normal load carrying surface by means of a substantially conventional twist lock fitted to the load carrying surface and mating with a corresponding recess in the support member.

5. An assembly according to any of the preceding claims, characterised in that each of the support members, when not in use, may be removed from the normal load carrying surface of the vehicle or stowed below the normal load carrying surface of the transporter vehicle, so that the load carrying surface of the transporter vehicle is left substantially horizontally flat.

6. An assembly according to any of the preceding claims, characterised in that when not in use each support member is capable of being retracted below the normal load carrying surface of the transporter vehicle, either by linear movement in a direction parallel to the longitudinal axis of the support member or by pivotal movement about a point at or near the lower end of the support member.

7. A support member for locating cargo support means on a transporter vehicle, characterised in that said support member is for attachment to the normal load carrying surface of a transporter vehicle and is adapted so as to be capable of detachable attachment to cargo support means above the level of the normal load carrying surface of the transporter vehicle.

8. A support member according to claim 7, characterised in that the support member is adapted for retraction below the level of the normal load carrying surface of the transporter vehicle, when not in use, so as to leave the load carrying surface substantially flat.

9. A support member according to claim 7, characterised in that the support member is capable of being fitted with substantially horizontally extending rails, that, in use, restrain the transverse and/or longitudinal movement, relative to the transporter vehicle, of cargo carried between the normal load carrying surface of the transporter vehicle, and cargo support means.

10. A method of securing detachable cargo support means to a transporter vehicle, characterised in that the method comprises locating the cargo support means on support members projecting upwardly from the normal load carrying surface of the transporter vehicle, so that additional cargo may be carried in the space between the normal load carrying surface of the transporter vehicle and the cargo support means.

FIG.1

FIG.4

FIG.5

**FIG.3**

**FIG.2**

European Patent Office

EUROPEAN SEARCH REPORT

0079994

Application number

EP 81 30 5524.1

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | DE - U1 - 8 120 153 (MÜLLER) <br> * entire document * <br><br> -- | 1-4,7, 10 | B 60 P 1/64 |
| A | WO - A1 - 80/01553 (BILSPEDITION) <br> * fig. 1 * <br><br> -- | | |
| A | DE - A1 - 2 731 630 (BOTH) <br> * fig. 1 * <br><br> ---- | | |

**TECHNICAL FIELDS SEARCHED (Int.Cl. ³)**

B 60 P 1/00

B 60 P 7/00

B 62 D 33/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| Place of search <br> Berlin | Date of completion of the search <br> 03-06-1982 | Examiner <br> LUDWIG | |

EPO Form 1503.1 06.78